# EUROPEAN PATENT APPLICATION

(11) **EP 4 817 390 A1**
(43) Date of publication of application: **07.10.2026**
(21) Application number: 26161729.4
(22) Date of filing: 02.03.2026
(51) Int. Cl.: A01D 34/00, A01D 34/66

(54) **COMPACT DUAL BLADE DISC ROBOTIC LAWN MOWER**

(30) Priority: 03.04.2025 CN 202520623514 U
(71) Applicant: Automax Technologies (Hong Kong) Co., Limited, Kowloon Hong Kong (HK)
(72) Inventor: LI, Fei, Suzhou, 215104 (CN); KANG, Pengyu, Suzhou, 215104 (CN)
(74) Representative: Gill Jennings & Every LLP

(57) **Abstract**

The present invention relates to a robotic lawn mower (11) including a cutting assembly. The cutting assembly includes a first cutting disc (311) and a second cutting disc (312), the first cutting disc has a first cutting area that is circular with a first center point and a first cutting radius (R1), while the second cutting disc has a second cutting area that is circular with a second center point and a second cutting radius (R2). A minimum distance between the first and second cutting areas is L1. A distance between projections of the first center point and the second center point in a width direction of a body is L2. An angle between a line (b) connecting the first and second center points and the width direction of the body is α, where 0°<α≤80°, R1>R2 and R1-R2<L2, and 0.01≤L1/L2≤0.6666.

## Description

The present application claims priority to Chinese Patent Application No. 202520623514.6, filed with the China National Intellectual Property Administration on April 3, 2025 and entitled "ROBOTIC LAWN MOWER".

### TECHNICAL FIELD

The present application relates to the technical field of lawn mowers, and in particular, to a robotic lawn mower.

### BACKGROUND

A lawn mower, also known as a grass cutter, grass mower, or lawn trimmer, is a mechanical tool used for trimming lawns, vegetation, and the like.

In the conventional technology, a single cutting disc is typically used for cutting operations, but it fails to cut grass near obstacles or boundaries. To solve this problem, the patent with the Patent authorization Number. CN115777327B utilizes an external attachment module that performs edge trimming using a trimmer line. However, the trimmer line has drawbacks such as over-high rotational speed, violent vibration, and loud noise. If an auxiliary cutting disc is utilized for edge trimming, the positional arrangement of the two cutting discs is difficult to control. When the two cutting discs are spaced too close to each other, their blades may interfere, posing safety hazards and potential grass jamming issues. Conversely, when the two cutting discs are spaced too far apart, the lawn mower's structure becomes less compact, resulting in an increase in dimensions of the body.

Therefore, how to design a mowing device with superior grass-cutting performance, high safety, no grass jamming, and a more compact and reasonable structure is a major concern of those skilled in the art.

### SUMMARY

According to the present invention, there is provided a robotic lawn mower as defined in claim 1.

The present application provides a robotic lawn mower that not only reduces grass jamming risks but also enables reasonable control of overall dimensions of the robotic lawn mower, resulting in a more compact and reasonable structure of the robotic lawn mower.

Existing robotic lawn mowers in the conventional technology can cut weeds and basically achieve removal of most weeds along their moving paths. However, for weeds near obstacles or boundaries of operating areas, an additional auxiliary cutting module is required to enhance weed removal performance. Some existing mowing devices with improved weed removal performance near boundaries of operating areas in the conventional technology typically incorporate an auxiliary cutting module near a main cutting module. When both the main and the auxiliary cutting modules are arranged at the bottom of a lawn mower, their positional arrangement is difficult to control: if they are spaced too close to each other, grass jamming may occur therebetween, potentially leading to cross-interference and safety hazards; conversely, if they are spaced too far apart, the lawn mower's dimensions will be increased to some degree, leading to less compact or reasonable structural dimensions of the lawn mower.

In order to solve the above problems, the present application provides a robotic lawn mower, including: a body having a length direction and a width direction that are perpendicular to each other; a cutting assembly arranged at a bottom of the body and configured to move with the body to cut vegetation, including a first cutting disc and a second cutting disc; and a control module configured to activate or deactivate the first and second cutting discs, where the first cutting disc has a first cutting area that is circular in shape with a first center point and a first cutting radius, while the second cutting disc has a second cutting area that is circular in shape with a second center point and a second cutting radius; the first cutting radius is R1, while the second cutting radius is R2; and a minimum distance between the first and second cutting areas is L1, a distance between a projection of the first center point in the width direction of the body and a projection of the second center point in the width direction of the body is L2, and an angle between a line connecting the first and second center points and the width direction of the body is α, where 0° < α ≤ 80°, R1 > R2 and R1 - R2 < L2, and 0.01 ≤ L1/L2 ≤ 0.6666.

In this way, by arranging the first and second cutting discs at the bottom of the body, reasonably setting the minimum distance L1 between the first cutting area of the first cutting disc and the second cutting area of the second cutting disc, the distance L2 between the projection of the first center point in the width direction of the body and the projection of the second center point in the width direction of the body, and the angle α between the line connecting the first and second center points and the width direction, and controlling L1, L2, and α to satisfy 0° < α ≤ 80°, R1 > R2 and R1 - R2 < L2, and 0.01 ≤ L1/L2 ≤ 0.6666, the above-described solution can achieve a reasonable positional arrangement of the first and second cutting discs at the bottom of the body, reducing grass jamming risks therebetween while enabling reasonable control of overall dimensions of the robotic lawn mower.

By controlling the angle α between the line connecting the first and second center points and the width direction to satisfy 0° < α ≤ 80°, the solution of the present application not only enables projections of the first and second center points along the length direction to be not completely overlapped but also makes the line connecting the first and second center points offset by at least 10° relative to the width direction of the body, thereby significantly increasing the non-overlapping degree of the cutting areas of the first and second cutting discs along the moving path of the body and facilitating more effective cutting capacity utilization of the second cutting disc.

When α = 0°, the first and second center points fall on a first straight line along the width direction of the body. In this case, the two cutting discs occupy excessive space of the body along the width direction, leading to an increase in the dimension of the robotic lawn mower along the width direction and less compact or reasonable spatial structural dimensions of the robotic lawn mower.

When α = 90°, the first and second center points fall on a straight line along the length direction of the body. Since the body of the robotic lawn mower in the solution of the present application can be configured to move and cut vegetation along the length direction, and given that R1 > R2, the cutting area of the second cutting disc along the moving path would completely fall within that of the first cutting disc along the moving path, resulting in a complete waste of cutting capacity of the second cutting disc.

When α = 80°, the cutting area of the second cutting disc along the moving path is offset to some degree from that of the first cutting disc along the moving path, enabling the robotic lawn mower to utilize the cutting capacity of the second cutting disc to assist the first cutting disc in cutting vegetation; however, when 80° < α < 90°, although the second cutting disc is offset to some degree from the first cutting disc, the degree of offset is limited, and the cutting areas of the first and second cutting discs along the moving path still significantly overlap, resulting in a significant waste of cutting capacity of the second cutting disc.

The solution of the present application ensures the distance L2 between the projection of the first center point in the width direction of the body and the projection of the second center point in the width direction of the body satisfies R1 - R2 < L2, thereby not only controlling the second cutting area to be offset to some degree from the first cutting area along the width direction but also ensuring that at least part of the second cutting area's projection in the width direction falls outside the projection of the first cutting area in the width direction. This design prevents the cutting area of the second cutting disc along the moving path from completely falling within that of the first cutting disc along the moving path and facilitates effective cutting capacity utilization of the second cutting disc.

When R1 - R2 = L2, the projection of the second cutting area in the width direction completely falls within the first cutting area's corresponding projection, and the cutting area of the second cutting disc along the moving path also completely falls within that of the first cutting disc along the moving path, resulting in a complete waste of cutting capacity of the second cutting disc.

When L2 < R1 - R2, the projection of the second cutting area in the width direction completely falls within the first cutting area's corresponding projection, and the cutting area of the second cutting disc along the moving path also completely falls within that of the first cutting disc along the moving path, resulting in a complete waste of cutting capacity of the second cutting disc.

When the minimum distance L1 between the first and second cutting areas is too large, a relatively far distance between the first and second cutting discs prevents grass jamming but results in wasted space of the body; conversely, when L1 is too small, the first and second cutting discs can be arranged more compactly but become prone to grass jamming. Similarly, when the distance L2 between the projection of the first center point in the width direction of the body and the projection of the second center point in the width direction of the body is too large, the first and second cutting discs occupy too much space along the width direction of the body, resulting in unreasonable dimensions of the body; conversely, when L2 is too small, the cutting areas of the first and second cutting discs along the moving path excessively overlap, resulting in low cutting efficiency and wasted cutting capacity of the second cutting disc. Simply controlling either L1 or L2 alone cannot achieve a reasonable positional arrangement of the two cutting discs, leading to various problems. By controlling a ratio of the minimum distance L1 between the first and second cutting areas to the distance L2 between the projection of the first center point in the width direction of the body and the projection of the second center point in the width direction of the body to satisfy 0.01 ≤ L1/L2 ≤ 0.6666, the solution of the present application restricts relative positions of the cutting areas of the two cutting discs at the bottom of the body and achieves a more reasonable spatial arrangement of the two cutting discs, thereby preventing grass jamming while ensuring reasonable space utilization of the body.

When L1/L2 = 0.01, L1 is smaller than L2, i.e. the minimum distance L1 between the first cutting area of the first cutting disc and the second cutting area of the second cutting disc is smaller than the distance L2 between the projection of the first center point in the width direction of the body and the projection of the second center point in the width direction of the body, and the cutting areas of the two cutting discs are close to each other. Experimental results demonstrate that when L1/L2 = 0.01, the robotic lawn mower prevents grass jamming between the first and second cutting discs, achieves efficient space utilization of the body, and controls the dimensions of the body within a reasonable range.

When 0 ≤ L1/L2 < 0.01, experimental results demonstrate that it may result in grass jamming between the first and second cutting discs, wasted space of the body, or unreasonable dimensions of the body.

When L1/L2 < 0, i.e. the cutting areas of the two cutting discs overlap, interference occurs when the two cutting discs operate.

When L1/L2 = 0.6666, L1 is approximately two-thirds of L2, i.e. the minimum distance L1 between the first cutting area of the first cutting disc and the second cutting area of the second cutting disc is closer to the distance L2 between the projection of the first center point in the width direction of the body and the projection of the second center point in the width direction of the body, and experimental results demonstrate that by controlling the minimum distance L1 between the cutting areas of the two cutting discs and the distance L2 between the projections of the center points of the two cutting areas in the width direction to satisfy L1/L2 = 0.6666, relative to the first cutting disc, the second cutting disc is arranged closer to either end of the body along the length direction, thereby preventing grass jamming while achieving compact and reasonable structural dimensions of the body through the positional arrangement of the two cutting discs.

When L1/L2 > 0.6666, L1 is greater than two-thirds of L2, i.e. the minimum distance L1 between the first cutting area of the first cutting disc and the second cutting area of the second cutting disc is greater than the distance L2 between the projection of the first center point in the width direction of the body and the projection of the second center point in the width direction of the body, and experimental results demonstrate that an excessive distance between the cutting areas of the two cutting discs necessitates larger dimensions of the body, leading to failure in arrangement of the second cutting disc in accordance with structural characteristics of the body. As a result, the positional arrangement of the two cutting discs fails to achieve compact and reasonable structural dimensions of the body.

In an embodiment of the present application, the robotic lawn mower further includes an environmental perception module configured to detect a relative positional relationship between the body and an obstacle or operating area, and the control module is configured to activate the second cutting disc when the environmental perception module detects a preset condition.

In this way, by arranging the environmental perception module, the robotic lawn mower can detect the relative positional relationship between the body and the obstacle or operating area. When the robotic lawn mower approaches the obstacle or a boundary of the operating area where the first cutting disc cannot effectively perform edge trimming, the control module can automatically control the second cutting disc to assist the first cutting disc in mowing, thereby helping improve weed removal near the obstacle or the boundary of the operating area while enhancing the robotic lawn mower's practical applicability.

In an embodiment of the present application, the preset condition includes that a distance between the body and an obstacle or a boundary of an operating area is less than a set threshold.

In this way, when the body moves near an obstacle or a boundary of an operating area and the distance between the body and the obstacle or the boundary of the operating area is smaller than the set threshold, the environmental perception module can promptly detect the signal and the control module will control the second cutting disc to assist the first cutting disc in mowing, ensuring effective weed removal near the obstacle or the boundary of the operating area. For example, when the environmental perception module detects that the body is approaching an obstacle or a boundary of an operating area within 10 cm, the control module activates the second cutting disc to assist the first cutting disc in mowing, thereby enhancing the robotic lawn mower's edge trimming performance; conversely, when the environmental perception module detects that the body has moved beyond 10 cm from the obstacle or the boundary of the operating area, the control module deactivates the second cutting disc.

In this embodiment, the set distance threshold is not limited to 10 cm and can be adjusted according to factors such as the width of the body, the type of the obstacle, and the boundary of the operating area to ensure mowing performance near the obstacle or the boundary of the operating area.

In an embodiment of the present application, the environmental perception module includes at least one of a laser radar, a visual assembly, or a physical perception assembly.

In practical applications, different robotic lawn mowers may be equipped with various environmental perception modules, for example, some use a laser radar for ranging and positioning; some rely on a visual assembly to perceive their surrounding environments; and some detect their positions through physical boundaries set around their operating areas. Certainly, multiple environmental perception modules can also be configured simultaneously to enhance environmental perception.

In an embodiment of the present application, the robotic lawn mower further includes a human-machine interaction module configured to receive a control instruction, and the control module is configured to activate or deactivate the second cutting disc in response to the control instruction.

In this way, the human-machine interaction module allows users to manually set and activate or deactivate the second cutting disc based on the actual operating scenario, making the robotic lawn mower easier to operate and enhancing its practical applicability.

Certainly, during normal mowing operations of the robotic lawn mower, the second cutting disc can also operate simultaneously with the first cutting disc to improve mowing efficiency; or, the second cutting disc can be activated only near an obstacle or a boundary of an operating area to achieve better edge trimming performance.

In an embodiment of the present application, the angle α between the line connecting the first and second center points and the width direction of the body further satisfies 30° ≤ α ≤ 60°.

In this way, the angle α is controlled to satisfy 30° ≤ α ≤ 60°, and the line connecting the first and second center points is offset by at least 30° relative to the width direction of the body, effectively utilizing the space of the body along the length direction while reducing the dimension of the robotic lawn mower along the width direction. This design makes the relative positional arrangement of the two cutting discs on the robotic lawn mower more compact and reasonable. Additionally, by making the line connecting the first and second center points offset by at least 30° relative to the width direction of the body, the non-overlapping degree of the projections of the first and second center points along the length direction are further increased, further increasing the offset between the cutting areas of the first and second cutting discs along the moving path and reducing overlap between the cutting areas of the first and second cutting discs in the width direction. As a result, the cutting capacity of the second cutting disc is fully utilized and the overall cutting efficiency of the two cutting discs is improved.

When α = 30°, the second center point can be offset relative to the first center point toward either end of the body along the length direction, effectively utilizing the space of the body along the length direction while reducing the dimension of the robotic lawn mower along the width direction. This design makes the relative positional arrangement of the two cutting discs on the robotic lawn mower more compact and reasonable. When 0° < α < 30°, although the second cutting disc is offset to some degree from the first cutting disc along the length direction, the degree of offset is limited. As a result, the space of the body along the length direction cannot be fully utilized, requiring an increase in the lateral dimension of the body along the width direction, which raises manufacturing costs and leads to a less compact or reasonable spatial structure of the robotic lawn mower.

When α = 60°, the cutting area of the second cutting disc along the moving path is offset to some degree from that of the first cutting disc along the moving path, reducing overlap between the cutting areas of the first and second cutting discs along the moving path and effectively utilizing the cutting capacity of the second cutting disc for cutting vegetation; however, when 60° < α < 80°, although the second cutting disc is offset to some degree from the first cutting disc along the width direction, the degree of offset is limited, and the cutting areas of the first and second cutting discs along the moving path still significantly overlap, resulting in a significant waste of cutting capacity of the second cutting disc.

In an embodiment of the present application, the angle α between the line connecting the first and second center points and the width direction of the body is equal to 45°.

In this way, the offset distance of the second center point relative to the first center point is equal along the length and width directions of the body, enabling the second cutting disc to fully utilize the space of the body along the length direction for arrangement and ensuring a reasonable spatial arrangement of the two cutting discs on the robotic lawn mower. At the same time, the offset between the cutting areas of the first and second cutting discs along the moving path is appropriate so that the robotic lawn mower can fully utilize the cutting capacity of the second cutting disc to assist the first cutting disc in cutting vegetation.

In an embodiment of the present application, orthographic projections of the first and second cutting areas in the width direction of the body partially overlap, and a length of a projection of an overlapping portion between the first cutting area and the second cutting area in the width direction of the body is L3, where 0 < L3/R2 < 2.

When the second cutting area completely falls on either side of the orthographic projection of the first cutting area in the width direction, there is no overlap between the orthographic projections of the two cutting discs in the width direction, i.e. L3 = 0, resulting in L3/R2 = 0. In this case, the two cutting discs occupy excessive space of the body along the width direction, leading to an increase in the dimension of the robotic lawn mower along the width direction and a less compact or reasonable spatial arrangement of the robotic lawn mower.

When the second cutting area falls on either side of the orthographic projection of the first cutting area in the width direction, the orthographic projections of the two cutting discs in the width direction overlap only at the edges, i.e. L3 = 0, still resulting in L3/R2 = 0. In this case, the two cutting discs occupy excessive space of the body along the width direction, leading to an increase in the dimension of the robotic lawn mower along the width direction and a less compact or reasonable spatial arrangement of the robotic lawn mower.

When the second cutting area falls within the orthographic projection of the first cutting area in the width direction, the orthographic projections of the two cutting discs in the width direction completely overlap, i.e. L3 = 2R2, resulting in L3/R2 = 2. In this case, the cutting area of the second cutting disc along the moving path completely falls within that of the first cutting disc 3 along the moving path, resulting in a complete waste of cutting capacity of the second cutting disc.

When the second cutting area completely falls within the orthographic projection of the first cutting area in the width direction, the orthographic projections of the two cutting discs in the width direction completely overlap, i.e. L3 = 2R2, resulting in L3/R2 = 2. In this case, the cutting area of the second cutting disc along the moving path completely falls within that of the first cutting disc along the moving path, resulting in a complete waste of cutting capacity of the second cutting disc.

By controlling L3 to satisfy 0 < L3/R2 < 2, the second cutting area of the second cutting disc along the moving path maintains a certain degree of overlap with the first cutting area along the moving path of the body, preventing two undesirable scenarios: first, the first and second cutting areas along the moving path are completely non-overlapped or overlap only at the edges, which would not only fail to achieve auxiliary vegetation cutting by the second cutting disc to assist the first cutting disc but also lead to unreasonable space utilization of the body along the length direction and unreasonable arrangement of the two cutting discs on the body; second, the second cutting area completely falls within the first cutting area or the first and second cutting areas overlap only at the edges along the moving path, which would result in wasted cutting capacity of the second cutting disc.

In an embodiment of the present application, the minimum distance L1 between the first and second cutting areas further satisfies 5 mm ≤ L1 ≤ 200 mm.

In this way, when L1 = 5 mm, the first and second cutting areas are very close to each other, resulting in a very compact positional arrangement of the two cutting discs on the body, which facilitates the design of a more miniaturized and integrated body of the robotic lawn mower; when L1 = 200 mm, the first and second cutting areas are spaced apart at a certain distance, allowing the positional arrangement of the second cutting disc to fully utilize the structural characteristics of the body along the length direction, which facilitates a more reasonable structural arrangement of the robotic lawn mower, particularly suitable for robotic lawn mowers with rectangular or nearly rectangular bottoms; and when 5 mm < L1 < 200 mm, the design of the robotic lawn mower can be adjusted to prioritize either compactness or rationalization as needed, making the robotic lawn mower adaptable to a wider range of mowing scenarios.

In an embodiment of the present application, the distance L2 between the projection of the first center point in the width direction of the body and the projection of the second center point in the width direction of the body further satisfies 300 mm ≤ L2 ≤ 500 mm.

In this way, by restricting L2 within the range of 300 mm ≤ L2 ≤ 500 mm, the dimension of the robotic lawn mower's body along the width direction can be restricted, ensuring the body maintains an appropriate spanning distance along its moving path while maintaining the mowing efficiency of the robotic lawn mower.

In an embodiment of the present application, a diameter of the first cutting area is D1, satisfying 100 mm ≤ D1 ≤ 350 mm; and a diameter of the second cutting area is D2, satisfying 80 mm ≤ D2 ≤ 180 mm.

In this way, by designing the robotic lawn mower according to the aforementioned dimensional requirements, the robotic lawn mower can adapt to most mowing scenarios while simultaneously balancing factors such as energy consumption and dimensions of the body.

In an embodiment of the present application, an orthographic projection of the second cutting area on the body falls within the body.

In this way, by making the orthographic projection of the second cutting area on the body fall within the body, i.e. the edge of the operating area of the second cutting disc remains inside the edge of the body, it prevents the second cutting disc from protruding beyond the body during operation, eliminating potential safety hazards and ensuring safe operation of the robotic lawn mower.

In an embodiment of the present application, a rotational speed of the first cutting disc is V1, satisfying 1800 r/min ≤ V1 ≤ 3800 r/min; and a rotational speed of the second cutting disc is V2, satisfying 2000 r/min ≤ V2 ≤ 6000 r/min.

In this way, by controlling the rotational speed V1 of the first cutting disc to satisfy 1800 r/min ≤ V1 ≤ 3800 r/min and the rotational speed V2 of the second cutting disc to satisfy 2000 r/min ≤ V2 ≤ 6000 r/min, the wide mowing power range of the first and second cutting discs of the robotic lawn mower can meet most operational requirements on the market, making the robotic lawn mower adaptable to a vast majority of mowing scenarios.

In an embodiment of the present application, the first cutting disc includes a first base and one or more first blades movably mounted around a periphery of the first base, where the first blades are rotatable with the first base, and the first cutting area is a maximum cutting area formed by rotation of the first blades with the first base; and the second cutting disc includes a second base and one or more second blades movably mounted around a periphery of the second base, where the second blades are rotatable with the second base, and the second cutting area is a maximum cutting area formed by rotation of the second blades with the second base.

In this way, when encountering dense grass, the first blades have a greater resistance to rotation, causing them to rotate at a certain angle opposite to the rotational direction of the first base, thereby providing a certain degree of protection to the drive assembly of the first cutting disc and preventing damage to the drive assembly due to overload. Similarly, when encountering dense grass, the second blades have a greater resistance to rotation, causing them to rotate at a certain angle opposite to the rotational direction of the second base, thereby providing a certain degree of protection to the drive assembly of the second cutting disc and preventing damage to the drive assembly due to overload.

The present application has the following beneficial effects: by arranging the first and second cutting discs at the bottom of the body, reasonably setting the minimum distance L1 between the first cutting area of the first cutting disc and the second cutting area of the second cutting disc, the distance L2 between the projection of the first center point in the width direction of the body and the projection of the second center point in the width direction of the body, and the angle α between the line connecting the first and second center points and the width direction, and controlling L1, L2, and α to satisfy 0° < α ≤ 80°, R1 > R2 and R1 - R2 < L2, and 0.01 ≤ L1/L2 ≤ 0.6666, the present application can achieve a reasonable positional arrangement of the first and second cutting discs at the bottom of the body, reducing grass jamming risks therebetween while enabling reasonable control of overall dimensions of the robotic lawn mower.

### BRIEF DESCRIPTION OF DRAWINGS

To describe the technical solutions in the embodiments of the present application more clearly, the accompanying drawings required to describe the embodiments are briefly described below. Apparently, the accompanying drawings described below are only some embodiments of the present application. Those skilled in the art may further obtain other accompanying drawings based on these accompanying drawings without creative efforts.
FIG. 1 is a schematic structural diagram of a robotic lawn mower in an embodiment of the present application.
FIG. 2 is a schematic diagram of L1 between first and second cutting discs of the robotic lawn mower shown in FIG. 1.
FIG. 3A is a schematic diagram of L2 between first and second cutting discs of the robotic lawn mower shown in FIG. 1.
FIG. 3B is a schematic diagram of the first and second cutting discs of the robotic lawn mower shown in FIG. 3A when R1 - R2 = L2.
FIG. 3C is a schematic diagram of the first and second cutting discs of the robotic lawn mower shown in FIG. 3A when R1 - R2 > L2.
FIG. 3D is a schematic diagram of the first and second cutting discs of the robotic lawn mower shown in FIG. 3A when R1 - R2 < L2.
FIG. 4A is a schematic diagram of α between first and second cutting discs of a robotic lawn mower.
FIG. 4B is a schematic diagram of relative positions of the first and second cutting discs of the robotic lawn mower shown in FIG. 4A when α = 0°.
FIG. 4C is a schematic diagram of relative positions of the first and second cutting discs of the robotic lawn mower shown in FIG. 4A when α = 90°.
FIG. 4D is a schematic diagram of relative positions of the first and second cutting discs of the robotic lawn mower shown in FIG. 4A when α = 80°.
FIG. 4E is a schematic diagram of relative positions of the first and second cutting discs of the robotic lawn mower shown in FIG. 4A when α = 30°.
FIG. 4F is a schematic diagram of relative positions of the first and second cutting discs of the robotic lawn mower shown in FIG. 4A when α = 60°.
FIG. 4G is a schematic diagram of relative positions of the first and second cutting discs of the robotic lawn mower shown in FIG. 4A when α = 45°.
FIG. 4H is a schematic diagram of the first and second cutting discs of the robotic lawn mower shown in FIG. 4A when they are arranged at a diagonal position at a bottom of a body.
FIG. 5A is a schematic diagram of L3 between first and second cutting discs of the robotic lawn mower shown in FIG. 1.
FIG. 5B is a schematic diagram of relative positions of the first and second cutting discs of the robotic lawn mower shown in FIG. 5A when L3 = 0.
FIG. 5C is another schematic diagram of relative positions of the first and second cutting discs of the robotic lawn mower shown in FIG. 5A when L3 = 0.
FIG. 5D is a schematic diagram of relative positions of the first and second cutting discs of the robotic lawn mower shown in FIG. 5A when L3 = 2.
FIG. 5E is another schematic diagram of relative positions of the first and second cutting discs of the robotic lawn mower shown in FIG. 5A when L3 = 2.

Reference signs in the accompanying drawings:
11: body; 21: traveling assembly; 211: first traveling wheel; 212: second traveling wheel; 31: cutting assembly; 311: first cutting disc; 3111: first base; 3112: first blade; 312: second cutting disc; 3121: second base; 3122: second blade; 41: control module; 42: environmental perception module; 51: human-machine interaction module; a: first straight line; b: center connecting line; c: first tangent line; d: second tangent line; e: third tangent line; f: fourth tangent line; g: fifth tangent line; h: diagonal line; m: first center-point line; and n: second center-point line.

### DESCRIPTION OF EMBODIMENTS

The technical solutions in the embodiments of the present application are clearly and completely described below with reference to the accompanying drawings in the embodiments of the present application. Apparently, the described embodiments are only some rather than all of the embodiments of the present application. All other embodiments obtained by those skilled in the art based on the embodiments of the present application without creative efforts shall fall within the protection scope of the present application. Moreover, it should be understood that the embodiments described herein are only intended to explain rather than limit the present application. In the present application, unless otherwise stated, directional terms such as "up", "down", "left", and "right" generally refer to the actual operational or working orientations of a device, specifically corresponding to the directions in the accompanying drawings.

In the present application, unless otherwise expressly specified and defined, terms such as "connected", "connection", and "stacked" shall be understood in a broad sense. For example, a connection may be a fixed connection, a detachable connection, or an integral connection; or it may be a direct connection or an indirect connection via an intermediate medium; or it may be a connection between two elements or an interaction between two elements. For those of ordinary skill in the art, the specific meaning of the foregoing terms in the present application may be understood based on specific situations.

Existing robotic lawn mowers in the conventional technology can cut weeds and achieve removal of most weeds along their moving paths. However, for weeds near obstacles or boundaries of operating areas, an additional auxiliary cutting module is required to enhance weed removal performance. Some existing mowing devices with improved edge trimming performance in the conventional technology typically incorporate an auxiliary cutting module near a main cutting module. When both the main and the auxiliary cutting modules are arranged at the bottom of a lawn mower, their positional arrangement is difficult to control: if they are spaced too close to each other, grass jamming may occur therebetween, potentially leading to cross-interference and safety hazards; conversely, if they are spaced too far apart, the lawn mower's dimensions will be increased to some degree, leading to a less compact or reasonable arrangement of the lawn mower.

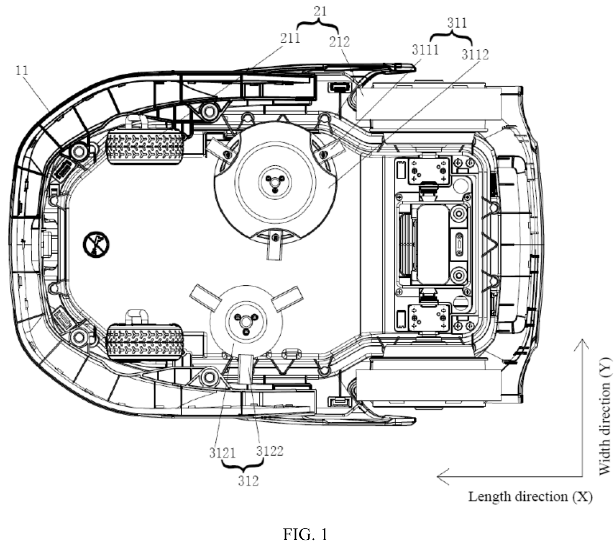

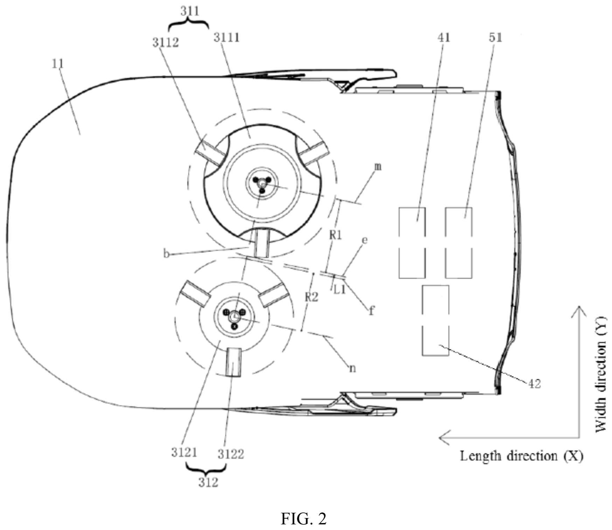

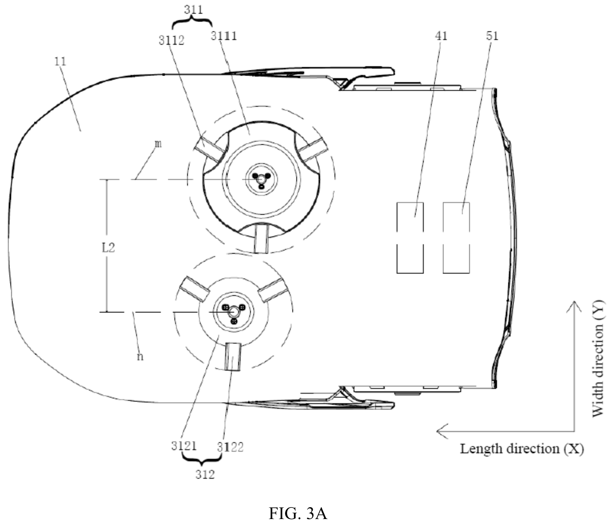

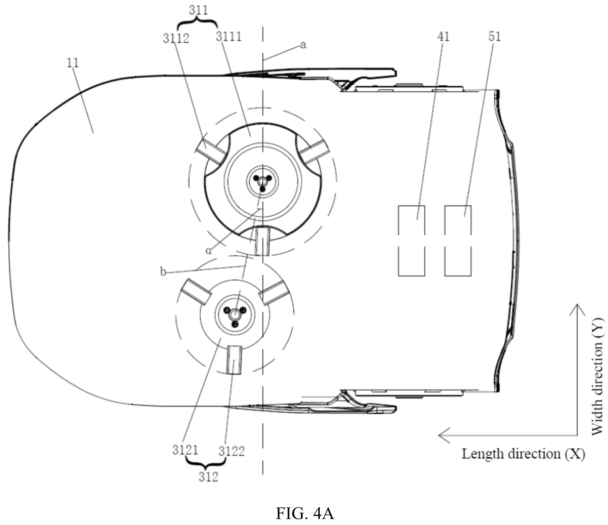

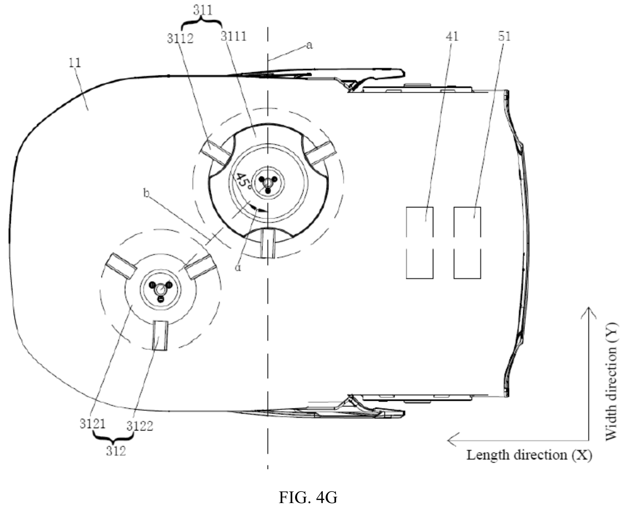

In order to solve the above problems, referring to FIGs. 1-5E, the present application provides a robotic lawn mower, including: a body 11, which may include a base plate and a housing mounted on the base plate, where the base plate may have a square or approximately square shape, or alternatively a rectangular or approximately rectangular structure, the body 11 has a length direction X and a width direction Y that are perpendicular to each other, with a dimension along the length direction X being configurable between 50 cm and 100 cm and a dimension along the width direction Y being configurable between 30 cm and 100 cm, and the robotic lawn mower can be configured to move along the length direction X; a cutting assembly 31 arranged at a bottom of the body 11 and configured to move with the body 11 to cut vegetation, including a first cutting disc 311 and a second cutting disc 312, where the first cutting disc 311 and second cutting disc 312 generally serve as main and auxiliary cutting discs respectively, with the robotic lawn mower performing its main vegetation cutting operations through the main cutting disc while the auxiliary cutting disc addresses areas inaccessible to the main cutting disc, thereby enhancing the robotic lawn mower's mowing performance, and compared to mowing devices using trimmer lines for auxiliary cutting, the auxiliary cutting disc achieves equivalent cutting performance at a lower rotational speed, contributing to less vibration, lower energy consumption, and consequently more stable operation and greater durability of the robotic lawn mower; and a control module 41 configured to activate or deactivate the first and second cutting discs 311, 312, typically including a microcontroller unit, a memory, and associated peripheral circuitry, where the first cutting disc 311 has a first cutting area that is formed by rotation of the first cutting disc 311 under an action of a drive assembly and is circular in shape with a first center point and a first cutting radius, while the second cutting disc 312 has a second cutting area that is formed by rotation of the second cutting disc 312 under an action of a drive assembly and is circular in shape with a second center point and a second cutting radius; the first cutting radius is R1, while the second cutting radius is R2; a minimum distance between the first and second cutting areas is L1, as shown in FIG. 2, a line connecting the first and second center points is a center connecting line b, the first and second cutting areas intersect with the center connecting line b at respective points, from which a third tangent line e and a fourth tangent line f are drawn, and a distance between the third tangent line e and the fourth tangent line f is L1; a distance between the projection of the first center point in the width direction of the body 11 and the projection of the second center point in the width direction of the body 11 is L2, as shown in FIG. 3A, a first center-point line m is a straight line extending along the length direction X and passing through the first center point, while a second center-point line n is a straight line extending along the length direction X and passing through the second center point, and a distance between the first center-point line m and the second center-point line n is L2; and an angle between the line connecting the first and second center points and the width direction Y of the body 11 is α, as shown in FIG. 4A, a straight line a extends along the width direction Y and passes through the first center point, and an angle between the center connecting line b and the straight line a is α, where 0° < α ≤ 80°, R1 > R2 and R1 - R2 < L2, and 0.01 ≤ L1/L2 ≤ 0.6666.

In this way, by arranging the first and second cutting discs 311, 312 at the bottom of the body 11, reasonably setting the minimum distance L1 between the first cutting area of the first cutting disc 311 and the second cutting area of the second cutting disc 312, the distance L2 between the projection of the first center point in the width direction Y and the projection of the second center point in the width direction Y, and the angle α between the line b connecting the first and second center points and the width direction Y, and controlling L1, L2, and α to satisfy 0° < α ≤ 80°, R1 > R2 and R1 - R2 < L2, and 0.01 ≤ L1/L2 ≤ 0.6666, the above-described solution can achieve reasonable positional arrangement of the first and second cutting discs 311, 312 at the bottom of the body 11, reducing grass jamming risks therebetween while enabling reasonable control of overall dimensions of the robotic lawn mower.

Referring to FIG. 4A, by controlling the angle α between the line b connecting the first and second center points and the width direction Y to satisfy 0° < α ≤ 80°, the solution of the present application not only enables projections of the first and second center points in the length direction X to be not completely overlapped but also makes the line b connecting the first center point of the first cutting disc 311 and the second center point of the second cutting disc 312 offset by at least 10° relative to the width direction Y of the body 11, thereby significantly increasing the non-overlapping degree of the cutting areas of the first and second cutting discs 311, 312 along the moving path of the body 11 and facilitating more effective cutting capacity utilization of the second cutting disc 312.

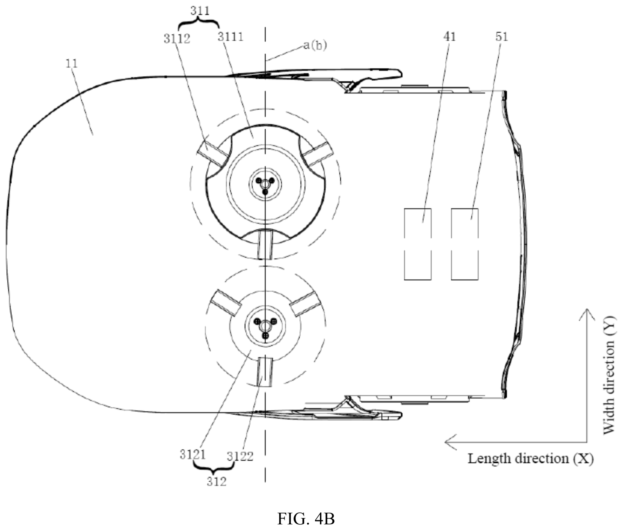

Referring to FIG. 4B, when α = 0°, the line b connecting the first and second center points extends along the width direction Y, i.e. the center connecting line b extends along the width direction Y. In this case, the projections of the first and second center points in the length direction X of the body 11 coincide; the first straight line a and the center connecting line b are collinear; the first and second center points fall on the first straight line a along the width direction Y of the body 11; and the centers of the first and second cutting discs 311, 312 fall on the same straight line at the bottom of the body 11 along the width direction Y. The two cutting discs occupy excessive space of the body 11 along the width direction Y, leading to an increase in the dimension of the robotic lawn mower along the width direction Y and a less compact or reasonable spatial structure of the robotic lawn mower.

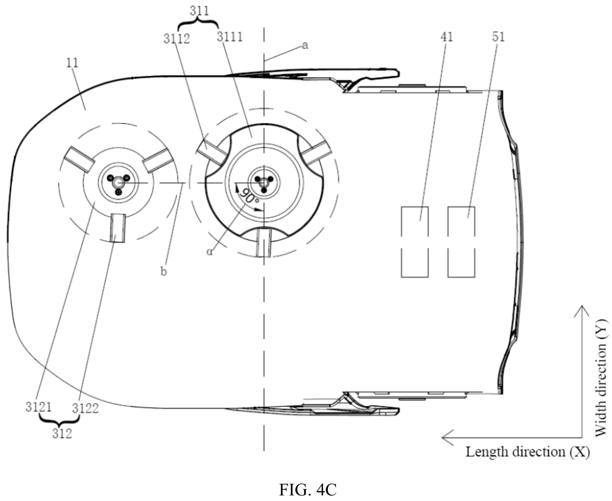

Referring to FIG. 4C, when α = 90°, the line b connecting the first and second center points extends along the length direction X. In this case, the projections of the first and second center points in the width direction Y overlap, and the first and second center points fall on a straight line along the length direction of the body 11. Since the body 11 of the robotic lawn mower in the solution of the present application can be configured to move and cut vegetation along the length direction X, and given that R1 > R2, the cutting area of the second cutting disc 312 along the moving path would completely fall within that of the first cutting disc 311 along the moving path, resulting in a complete waste of cutting capacity of the second cutting disc 312.

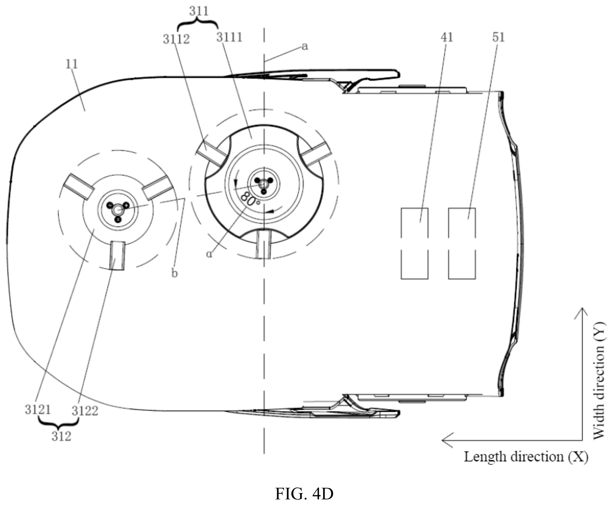

Referring to FIG. 4D, when α = 80°, the center connecting line b is offset by 10° toward one side of the body 11 along the width direction Y compared to the center connecting line b in the case where α = 90°, and the cutting area of the second cutting disc 312 along the moving path is offset to some degree from that of the first cutting disc 311 along the moving path, enabling the robotic lawn mower to utilize the cutting capacity of the second cutting disc 312 to assist the first cutting disc 311 in cutting vegetation; however, when 80° < α < 90°, the center connecting line b falls between the center connecting lines b in FIGs. 4C and 4D, and in this case, although the second cutting disc 312 is offset to some degree from the first cutting disc 311, the degree of offset is limited, and the cutting areas of the first and second cutting discs 311, 312 along the moving path still significantly overlap, resulting in a significant waste of cutting capacity of the second cutting disc 312.

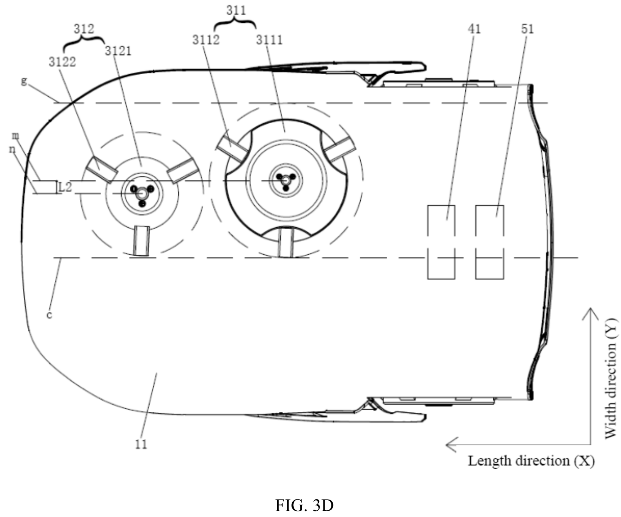

Referring to FIG. 3D, the solution of the present application ensures the distance L2 between the projection of the first center point in the width direction Y of the body 11 and the projection of the second center point in the width direction Y of the body 11 satisfies R1 - R2 < L2. In this case, at least part of the second cutting area is arranged on the body 11 outside the first tangent line c and the second tangent line g to make L2 always satisfy R1 - R2 < L2, thereby not only controlling the second cutting area to be offset to some degree from the first cutting area along the width direction Y but also ensuring that at least part of the projection of the second cutting area in the width direction Y falls outside the projection of the first cutting area in the width direction Y. This design prevents the cutting area of the second cutting disc 312 along the moving path from completely falling within that of the first cutting disc 311 along the moving path and facilitates effective cutting capacity utilization of the second cutting disc 312.

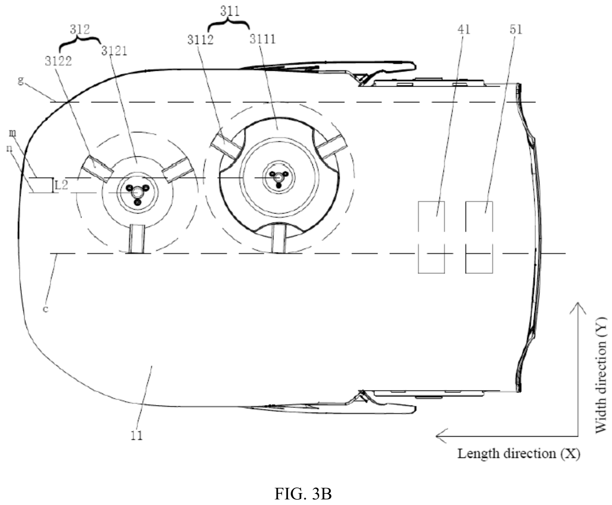

Referring to FIG. 3B, the first cutting area has a first tangent line c and a fifth tangent line g extending along the length direction X respectively on both sides along the width direction Y. When R1 - R2 = L2, the first cutting area of the first cutting disc 311 and the second cutting area of the second cutting disc 312 share the first tangent line c or the fifth tangent line g extending along the length direction X. In this case, the projection of the second cutting area in the width direction Y completely falls within the first cutting area's corresponding projection, and the cutting area of the second cutting disc 312 along the moving path also completely falls within that of the first cutting disc 311 along the moving path, resulting in a complete waste of cutting capacity of the second cutting disc 312.

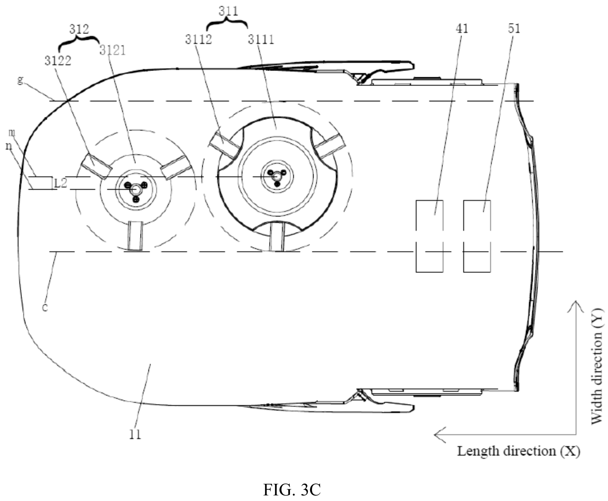

Referring to FIG. 3C, the first cutting area has a first tangent line c and a fifth tangent line g extending along the length direction X respectively on both sides along the width direction Y. When L2 < R1 - R2, the second cutting area of the second cutting disc 312 falls between the two tangent lines and L2 always satisfies L2 < R1 - R2. In this case, the projection of the second cutting area in the width direction Y completely falls within the first cutting area's corresponding projection, and the cutting area of the second cutting disc 312 along the moving path also completely falls within that of the first cutting disc 311 along the moving path, resulting in a complete waste of cutting capacity of the second cutting disc 312.

When the minimum distance L1 between the first and second cutting areas is too large, a relatively far distance between the first and second cutting discs 311, 312 prevents grass jamming but results in wasted space of the body 11; conversely, when L1 is too small, the first and second cutting discs 311, 312 can be arranged more compactly but become prone to grass jamming. Similarly, when the distance L2 between the projection of the first center point in the width direction Y and the projection of the second center point in the width direction Y is too large, the first and second cutting discs 311, 312 occupy too much space along the width direction Y of the body 11, resulting in unreasonable dimensions of the body 11; conversely, when L2 is too small, the cutting areas of the first and second cutting discs 311, 312 along the moving path excessively overlap, resulting in low cutting efficiency and wasted cutting capacity of the second cutting disc 312. Simply controlling either L1 or L2 alone cannot achieve a reasonable positional arrangement of the two cutting discs, leading to various problems. By controlling a ratio of the minimum distance L1 between the first and second cutting areas to the distance L2 between the projection of the first center point in the width direction Y of the body 11 and the projection of the second center point in the width direction Y of the body 11 to satisfy 0.01 ≤ L1/L2 ≤ 0.6666, the solution of the present application restricts relative positions of the cutting areas of the two cutting discs at the bottom of the body 11 and achieves more reasonable spatial arrangement of the two cutting discs, thereby preventing grass jamming while ensuring reasonable space utilization of the body 11.

When L1/L2 = 0.01, L1 is smaller than L2, i.e. the minimum distance L1 between the first cutting area of the first cutting disc 311 and the second cutting area of the second cutting disc 312 is smaller than the distance L2 between the projection of the first center point in the width direction Y and the projection of the second center point in the width direction Y, and the cutting areas of the two cutting discs are close to each other. Experimental results demonstrate that when L1/L2 = 0.01, the robotic lawn mower prevents grass jamming between the first and second cutting discs 311, 312, achieves efficient space utilization of the body 11, and controls the dimensions of the body 11 within a reasonable range.

When 0 ≤ L1/L2 < 0.01, experimental results demonstrate that it may result in grass jamming between the first and second cutting discs 311, 312, wasted space of the body 11, or unreasonable dimensions of the body 11.

When L1/L2 < 0, i.e. the cutting areas of the two cutting discs overlap, interference occurs when the two cutting discs operate.

When L1/L2 = 0.6666, L1 is approximately two-thirds of L2, i.e. the minimum distance L1 between the first cutting area of the first cutting disc 311 and the second cutting area of the second cutting disc 312 is closer to the distance L2 between the projection of the first center point in the width direction Y of the body 11 and the projection of the second center point in the width direction Y of the body 11, and experimental results demonstrate that by controlling the minimum distance L1 between the cutting areas of the two cutting discs and the distance L2 between the projections of the center points of the two cutting areas in the width direction Y to satisfy L1/L2 = 0.6666, relative to the first cutting disc 311, the second cutting disc 312 is arranged closer to either end of the body 11 along the length direction X, thereby preventing grass jamming while achieving compact and reasonable structural dimensions of the body 11 through the positional arrangement of the two cutting discs.

When L1/L2 > 0.6666, L1 is greater than two-thirds of L2, i.e. the minimum distance L1 between the first cutting area of the first cutting disc 311 and the second cutting area of the second cutting disc 312 is greater than the distance L2 between the projection of the first center point in the width direction Y of the body 11 and the projection of the second center point in the width direction Y of the body 11, and experimental results demonstrate that an excessive distance between the cutting areas of the two cutting discs necessitates larger dimensions of the body 11, preventing arrangement of the second cutting disc 312 in accordance with structural characteristics of the body 11. As a result, the positional arrangement of the two cutting discs fails to achieve compact and reasonable structural dimensions of the body 11.

The following experiments were conducted using two cutting discs with R1 = 110 mm and R2 = 55 mm, setting the rotational speed V1 of the first cutting disc 311 to 2400 rpm and the rotational speed V2 of the second cutting disc 312 to 5000 rpm. On grass with a height of 5 cm, the arrangement of the cutting discs on the body 11 was adjusted, and a mowing test was performed while the experimental data was recorded.

### Example 1:

The minimum distance L1 between the first and second cutting areas was controlled at 5 mm, while the distance L2 between the projection of the first center point in the width direction Y and the projection of the second center point in the width direction Y was 500 mm, resulting in L1/L2 = 0.01. Although the minimum distance L1 between the cutting areas of the two cutting discs was relatively small, no grass jamming occurred during the experiment. Additionally, the compact arrangement of the two cutting discs on the body 11 enabled full space utilization of the body 11 without unnecessarily increasing dimensions of the body 11, which helped reduce production costs and improve ease of use. In practical operation, the cutting capacity of the second cutting disc 312 was effectively utilized, ensuring the overall operating efficiency of both cutting discs.

### Example 2:

The minimum distance L1 between the first and second cutting areas was controlled at 10 mm, while the distance L2 between the projection of the first center point in the width direction Y and the projection of the second center point in the width direction Y was 400 mm, resulting in L1/L2 = 0.025. In this case, although the minimum distance L1 between the cutting areas of the two cutting discs was relatively small, no grass jamming occurred during the experiment. Additionally, the reasonable positional arrangement of the two cutting discs on the body 11 enabled full space utilization of the body 11 without unnecessarily increasing dimensions of the body 11, which helped reduce manufacturing costs and improve ease of use. In practical operation, the cutting capacity of the second cutting disc 312 was effectively utilized, ensuring the overall operating efficiency of both cutting discs.

### Example 3:

The minimum distance L1 between the first and second cutting areas was controlled at 30 mm, while the distance L2 between the projection of the first center point in the width direction Y and the projection of the second center point in the width direction Y was 300 mm, resulting in L1/L2 = 0.1. In this case, the minimum distance L1 between the cutting areas of the two cutting discs was appropriate, and no grass jamming occurred during the experiment. Additionally, the reasonable positional arrangement of the two cutting discs on the body 11 enabled full space utilization of the body 11 without unnecessarily increasing dimensions of the body 11, which helped reduce manufacturing costs and improve ease of use. In practical operation, the cutting capacity of the second cutting disc 312 was effectively utilized, ensuring the overall operating efficiency of both cutting discs.

### Example 4:

The minimum distance L1 between the first and second cutting areas was controlled at 50 mm, while the distance L2 between the projection of the first center point in the width direction Y and the projection of the second center point in the width direction Y was 350 mm, resulting in L1/L2 ≈ 0.1429. In this case, the minimum distance L1 between the cutting areas of the two cutting discs was appropriate, and no grass jamming occurred during the experiment. Additionally, the reasonable positional arrangement of the two cutting discs on the body 11 enabled full space utilization of the body 11 without unnecessarily increasing dimensions of the body 11, which helped reduce manufacturing costs and improve ease of use. In a practical operation, the cutting capacity of the second cutting disc 312 was effectively utilized, ensuring the overall operating efficiency of both cutting discs.

### Example 5:

The minimum distance L1 between the first and second cutting areas was controlled at 75 mm, while the distance L2 between the projection of the first center point in the width direction Y and the projection of the second center point in the width direction Y was 500 mm, resulting in L1/L2 = 0.15. In this case, the minimum distance L1 between the cutting areas of the two cutting discs was appropriate, and no grass jamming occurred during the experiment. Additionally, the reasonable positional arrangement of the two cutting discs on the body 11 enabled full space utilization of the body 11 without unnecessarily increasing dimensions of the body 11, which helped reduce manufacturing costs and improve ease of use. In practical operation, the cutting capacity of the second cutting disc 312 was effectively utilized, ensuring the overall operating efficiency of both cutting discs.

### Example 6:

The minimum distance L1 between the first and second cutting areas was controlled at 100 mm, while the distance L2 between the projection of the first center point in the width direction Y and the projection of the second center point in the width direction Y was 400 mm, resulting in L1/L2 = 0.25. In this case, the minimum distance L1 between the cutting areas of the two cutting discs was appropriate, and no grass jamming occurred during the experiment. Additionally, the reasonable positional arrangement of the two cutting discs on the body 11 enabled full space utilization of the body 11 without unnecessarily increasing dimensions of the body 11, which helped reduce manufacturing costs and improve ease of use. In a practical operation, the cutting capacity of the second cutting disc 312 was effectively utilized, ensuring the overall operating efficiency of both cutting discs.

### Example 7:

The minimum distance L1 between the first and second cutting areas was controlled at 150 mm, while the distance L2 between the projection of the first center point in the width direction Y and the projection of the second center point in the width direction Y was 450 mm, resulting in L1/L2 ≈ 0.33. In this case, although the minimum distance L1 between the cutting areas of the two cutting discs was relatively large, the reasonable arrangement of the two cutting discs on the body 11 enabled full space utilization of the body 11. In practical operation, the cutting capacity of the second cutting disc 312 was effectively utilized, ensuring the overall operating efficiency of both cutting discs and preventing grass jamming during the experiment.

### Example 8:

The minimum distance L1 between the first and second cutting areas was controlled at 180 mm, while the distance L2 between the projection of the first center point in the width direction Y and the projection of the second center point in the width direction Y was 300 mm, resulting in L1/L2 = 0.6. In this case, although the minimum distance L1 between the cutting areas of the two cutting discs was relatively large, the reasonable arrangement of the two cutting discs on the body 11 enabled full space utilization of the body 11. In practical operation, the cutting capacity of the second cutting disc 312 was effectively utilized, ensuring the overall operating efficiency of both cutting discs and preventing grass jamming during the experiment.

### Example 9:

The minimum distance L1 between the first and second cutting areas was controlled at 200 mm, while the distance L2 between the projection of the first center point in the width direction Y and the projection of the second center point in the width direction Y was 400 mm, resulting in L1/L2 = 0.5. In this case, although the minimum distance L1 between the cutting areas of the two cutting discs was relatively large, the reasonable arrangement of the two cutting discs on the body 11 enabled full space utilization of the body 11. In practical operation, the cutting capacity of the second cutting disc 312 was effectively utilized, ensuring the overall operating efficiency of both cutting discs and preventing grass jamming during the experiment.

### Example 10:

The minimum distance L1 between the first and second cutting areas was controlled at 200 mm, while the distance L2 between the projection of the first center point in the width direction Y and the projection of the second center point in the width direction Y was 300 mm, resulting in L1/L2 ≈ 0.6666. In this case, although the minimum distance L1 between the cutting areas of the two cutting discs was relatively large, the reasonable arrangement of the two cutting discs on the body 11 enabled full space utilization of the body 11. In practical operation, the cutting capacity of the second cutting disc 312 was effectively utilized, ensuring the overall operating efficiency of both cutting discs and preventing grass jamming during the experiment.

### Comparative Example 1:

The minimum distance L1 between the first and second cutting areas was controlled at 3 mm, while the distance L2 between the projection of the first center point in the width direction Y and the projection of the second center point in the width direction Y was 500 mm, resulting in L1/L2 = 0.006. In this case, since the minimum distance L1 between the cutting areas of the two cutting discs was very close, grass jamming frequently occurred during the experiment.

### Comparative Example 2:

The minimum distance L1 between the first and second cutting areas was controlled at 5 mm, while the distance L2 between the projection of the first center point in the width direction Y and the projection of the second center point in the width direction Y was 600 mm, resulting in L1/L2 ≈ 0.0083. In this case, due to the over-large distance L2 between the projection of the first center point in the width direction Y and the projection of the second center point in the width direction Y, the arrangement of the two cutting discs on the body 11 was unreasonable, resulting in wasted space, which forced dimensions of the body 11 to be unnecessarily increased, thereby increasing manufacturing costs.

### Comparative Example 3:

The minimum distance L1 between the first and second cutting areas was controlled at 2 mm, while the distance L2 between the projection of the first center point in the width direction Y and the projection of the second center point in the width direction Y was 500 mm, resulting in L1/L2 ≈ 0.0036. In this case, since the minimum distance L1 between the cutting areas of the two cutting discs was very close, grass jamming frequently occurred during the experiment.

### Comparative Example 4:

The minimum distance L1 between the first and second cutting areas was controlled at 1 mm, while the distance L2 between the projection of the first center point in the width direction Y and the projection of the second center point in the width direction Y was 500 mm, resulting in L1/L2 = 0.002. In this case, since the minimum distance L1 between the cutting areas of the two cutting discs was very close, grass jamming frequently occurred during the experiment.

### Comparative Example 5:

The minimum distance L1 between the first and second cutting areas was controlled at 10 mm, while the distance L2 between the projection of the first center point in the width direction Y and the projection of the second center point in the width direction Y was 650 mm, resulting in L1/L2 ≈ 0.0154. In this case, due to the over-large distance L2 between the projection of the first center point in the width direction Y and the projection of the second center point in the width direction Y, the arrangement of the two cutting discs on the body 11 was unreasonable, resulting in wasted space, which forced dimensions of the body 11 to be unnecessarily increased, thereby increasing manufacturing costs.

### Comparative Example 6:

The minimum distance L1 between the first and second cutting areas was controlled at 0.5 mm, while the distance L2 between the projection of the first center point in the width direction Y and the projection of the second center point in the width direction Y was 700 mm, resulting in L1/L2 ≈ 0.0007. In this case, since the minimum distance L1 between the cutting areas of the two cutting discs was very close, grass jamming frequently occurred during the experiment. Additionally, due to the over-large distance L2 between the projection of the first center point in the width direction Y and the projection of the second center point in the width direction Y, the arrangement of the two cutting discs on the body 11 was unreasonable, resulting in wasted space, which forced dimensions of the body 11 to be unnecessarily increased, thereby increasing manufacturing costs.

### Comparative Example 7:

The minimum distance L1 between the first and second cutting areas was controlled at 200 mm, while the distance L2 between the projection of the first center point in the width direction Y and the projection of the second center point in the width direction Y was 280 mm, resulting in L1/L2 ≈ 0.7143. In this case, since the minimum distance L1 between the cutting areas of the two cutting discs was too large, the distance between the two cutting discs was too far, resulting in wasted space of the body 11. Additionally, due to the too small distance L2 between the projection of the first center point in the width direction Y and the projection of the second center point in the width direction Y, the arrangement of the two cutting discs on the body 11 was unreasonable, and the cutting areas of the two cutting discs along the moving path excessively overlapped, resulting in wasted cutting capacity of the second cutting disc 312.

### Comparative Example 8:

The minimum distance L1 between the first and second cutting areas was controlled at 220 mm, while the distance L2 between the projection of the first center point in the width direction Y and the projection of the second center point in the width direction Y was 290 mm, resulting in L1/L2 ≈ 0.7586. In this case, since the minimum distance L1 between the cutting areas of the two cutting discs was too large, the distance between the two cutting discs was too far, resulting in wasted space of the body 11. Additionally, due to the too small distance L2 between the projection of the first center point in the width direction Y and the projection of the second center point in the width direction Y, the arrangement of the two cutting discs on the body 11 was unreasonable, and the cutting areas of the two cutting discs along the moving path excessively overlapped, resulting in wasted cutting capacity of the second cutting disc 312.

### Comparative Example 9:

The minimum distance L1 between the first and second cutting areas was controlled at 250 mm, while the distance L2 between the projection of the first center point in the width direction Y and the projection of the second center point in the width direction Y was 300 mm, resulting in L1/L2 ≈ 0.8333. In this case, since the minimum distance L1 between the cutting areas of the two cutting discs was too large, the distance between the two cutting discs was too far, and the arrangement of the two cutting discs on the body 11 was unreasonable, resulting in wasted space.

### Comparative Example 10:

The minimum distance L1 between the first and second cutting areas was controlled at 300 mm, while the distance L2 between the projection of the first center point in the width direction Y and the projection of the second center point in the width direction Y was 250 mm, resulting in L1/L2 ≈ 1.2. In this case, since the minimum distance L1 between the cutting areas of the two cutting discs was too large, the distance between the two cutting discs was too far. Additionally, due to the too small distance L2 between the projection of the first center point in the width direction Y and the projection of the second center point in the width direction Y, the arrangement of the two cutting discs on the body 11 was unreasonable, resulting in wasted space; moreover, the cutting areas of the two cutting discs along the moving path excessively overlapped, resulting in wasted cutting capacity of the second cutting disc 312.

The relevant parameters and experimental results in the above examples and comparative examples are recorded in Table 1.

**Table 1 Parameters of Examples 1-10 and Comparative Examples 1-10**

| | L1/mm | L2/mm | L1/L2 |
|---|---|---|---|
| Example 1 | 5 | 500 | 0.01 |
| Example 2 | 10 | 400 | 0.025 |
| Example 3 | 30 | 300 | 0.1 |
| Example 4 | 50 | 350 | 0.1429 |
| Example 5 | 75 | 500 | 0.15 |
| Example 6 | 100 | 400 | 0.25 |
| Example 7 | 150 | 450 | 0.3333 |
| Example 8 | 180 | 300 | 0.6 |
| Example 9 | 200 | 400 | 0.5 |
| Example 10 | 200 | 300 | 0.6666 |
| Comparative Example 1 | 3 | 500 | 0.006 |
| Comparative Example 2 | 5 | 600 | 0.0083 |
| Comparative Example 3 | 2 | 500 | 0.0036 |
| Comparative Example 4 | 1 | 500 | 0.002 |
| Comparative Example 5 | 10 | 650 | 0.0154 |
| Comparative Example 6 | 0.5 | 700 | 0.0007 |
| Comparative Example 7 | 200 | 280 | 0.7143 |
| Comparative Example 8 | 220 | 290 | 0.7586 |
| Comparative Example 9 | 250 | 300 | 0.8333 |
| Comparative Example 10 | 300 | 250 | 1.2 |

In an embodiment, the robotic lawn mower further includes an environmental perception module 42 configured to detect a relative positional relationship between the body 11 and an obstacle or operating area, specifically including information such as the distance and angle relative to the obstacle or a boundary of the operating area; the control module 41 is configured to activate the second cutting disc 312 when the environmental perception module 42 detects a preset condition; and when the environmental perception module 42 is capable of collecting information of the distance relative to the obstacle or the boundary of the operating area, the preset condition is a value or value range of the distance. When the environmental perception module 42 detects that the distance between the body 11 and the obstacle or the boundary of the operating area reaches the value or value range of the distance as the preset condition, the control module 41 activates the second cutting disc 312; when the environmental perception module 42 is capable of collecting information of the angle relative to the obstacle or the boundary of the operating area, the preset condition is an value or value range of the angle; and when the environmental perception module 42 detects that the angle between the body 11 and the obstacle reaches the value or value range of the angle as the preset condition, the control module 41 activates the second cutting disc 312. In this embodiment, by arranging the environmental perception module 42, the robotic lawn mower can detect the relative positional relationship between the body 11 and the obstacle or operating area. When the robotic lawn mower approaches the obstacle or the boundary of the operating area where the first cutting disc 311 cannot effectively perform edge trimming, the control module 41 can automatically control the second cutting disc 312 to assist the first cutting disc 311 in mowing, thereby helping improve weed removal near the obstacle or the boundary of the operating area while enhancing the robotic lawn mower's practical applicability.

In an embodiment, the preset condition includes that a distance between the body 11 and an obstacle or a boundary of an operating area is less than a set threshold. When the body 11 moves near an obstacle or a boundary of an operating area and the distance between the body and the obstacle or the boundary of the operating area is smaller than the set threshold, the environmental perception module 42 can promptly detect the signal indicating that the distance is smaller than the set threshold and the control module 41 will control the second cutting disc 312 to assist the first cutting disc 311 in mowing, ensuring effective weed removal near the obstacle or the boundary of the operating area. For example, when the environmental perception module 42 detects that the body 11 is approaching an obstacle or a boundary of an operating area within 10 cm, the control module 41 activates the second cutting disc 312 to assist the first cutting disc 311 in mowing, thereby enhancing the robotic lawn mower's edge trimming performance; conversely, when the environmental perception module 42 detects that the body 11 has moved beyond 10 cm from the obstacle or the boundary of the operating area, the control module 41 deactivates the second cutting disc 312.

It should be noted that in this embodiment, the set distance threshold is not limited to 10 cm and can be adjusted according to factors such as the width of the body 11, the type of the obstacle, and the boundary of the operating area to ensure mowing performance near the obstacle or the boundary of the operating area; and the set threshold can usually be set to any value or value range within 100 mm - 200 mm. For example, it can be set to 110 mm, 120 mm, 130 mm, 140 mm, 150 mm, 160 mm, 170 mm, 180 mm, 190 mm, 200 mm, or any interval between two of these values.

In an embodiment, the environmental perception module 42 includes at least one of a laser radar, a visual assembly, or a physical perception assembly.

It should be noted that in practical applications, different robotic lawn mowers may be equipped with various environmental perception modules, for example, some use a laser radar for ranging and positioning; some rely on a visual assembly to perceive their surrounding environments; and some detect their positions through physical boundaries set around obstacles or boundaries of their operating areas. Certainly, multiple environmental perception modules can also be configured simultaneously to enhance environmental perception.

Specifically, the laser radar can typically emit infrared light pulses to scan and construct real-time spatial models of obstacles, enabling precise identification of lawn boundaries, obstacles such as flower beds, trees, and pets, and terrain changes, and the robotic lawn mower can use the laser radar's ranging function to detect when the body 11 approaches an obstacle or a boundary of an operating range within a certain distance such as 10 cm, 15 cm, or 20 cm, automatically activating the second cutting disc 312 to enhance edge-trimming performance near the obstacle or the boundary of the operating range. Similarly, the visual assembly can typically include an image sensor that identifies lawn color and texture characteristics to distinguish between lawn and non-lawn areas such as flower beds or gravel paths, and it can also use a camera to detect moving obstacles such as pets and children or low-lying objects such as toys and garden hoses. By leveraging the visual perception capabilities of the visual assembly, the robotic lawn mower can detect when the body 11 approaches an obstacle or a boundary of an operating area within a certain distance such as 10 cm, 15 cm, or 20 cm, automatically activating the second cutting disc 312 to improve edge-trimming performance near the obstacle or the boundary of the operating range. In some robotic lawn mowers, the visual assembly can be combined with the laser radar to enhance perception robustness in dynamic environments, improving the robotic lawn mowers' adaptability to changing light conditions such as shaded areas under trees or weather conditions such as morning fog.

Additionally, the robotic lawn mower can also detect obstacles or boundaries of operating areas through a physical perception assembly. The physical perception assembly triggers the automatic activation of the second cutting disc 312 only when the body 11 of the robotic lawn mower physically contacts an obstacle or reaches a physical boundary, thereby enhancing edge-trimming performance near the obstacle or the boundary of the operating range. The physical perception assembly typically includes non-contact obstacle detection and contact-based obstacle detection, where the non-contact obstacle detection generally employs infrared and ultrasonic sensors to scan the forward path, enabling detection of obstacles such as stones or garden hoses in the lawn, which allows the robotic lawn mower to achieve dynamic obstacle avoidance to reduce collision risks; and the contact-based obstacle detection generally integrates collision sensors on the body 11 that immediately halt blade rotation and initiate reverse motion upon encountering low-lying obstacles such as flower bed edges, preventing mechanical damage. Some robotic lawn mowers can also integrate a bumper at the front of the housing of the body 11, with a photoelectric switch arranged on each side of the bumper. The bumper is provided with specially designed apertures, enabling the photoelectric switches to receive infrared rays. When the bumper contacts the edge of a low-lying obstacle, these apertures become blocked, interrupting the infrared rays to the photoelectric switches and triggering obstacle avoidance. The bumper at the front of the body 11 can not only prevent the robotic lawn mower from direct collision with obstacles to protect the body 11 of the robotic lawn mower from damage, but also ensure smooth cleaning operations. In practical applications, the robotic lawn mower can be equipped with at least one of the laser radar, the visual assembly, or the physical perception assembly depending on the application scenario, ensuring the robotic lawn mower is adaptable to diverse operating scenarios while maintaining optimal practical applicability.

In an embodiment, the robotic lawn mower further includes a human-machine interaction module 51 configured to receive a control instruction, and the control module 41 is configured to activate or deactivate the second cutting disc 312 in response to the control instruction. In this embodiment, the human-machine interaction module 51 can control the operational status of the second cutting disc 312 through the control module 41 based on an operating software app or a control panel. Where the human-machine interaction module 51 controls the operational status of the second cutting disc 312 through the control module 41 based on an operating software app, the robotic lawn mower is provided with a wireless communication module, which receives control signals generated by the operating software app, enabling the control module 41 to activate or deactivate the second cutting disc 312 based on the control signals. Specifically, users can configure the robotic lawn mower's operating mode via a mobile app to activate the second cutting disc 312 when the body 11 approaches an obstacle or a boundary of an operating area within a certain distance such as 10 cm, 15 cm, or 20 cm, thereby enhancing the robotic lawn mower's edge-trimming performance, and deactivate the second cutting disc 312 when the body 11 has moved beyond a certain distance such as 10 cm, 15 cm, or 20 cm from the obstacle or the boundary of the operating area. Where the human-machine interaction module 51 controls the operational status of the second cutting disc 312 through the control module 41 based on a control panel, the robotic lawn mower is provided with either a touch-sensitive or button-operated control panel. In this case, the control module 41 can be integrated into the control panel, where user interactions via touch or button presses generate control signals that direct the control module 41 to activate or deactivate the second cutting disc 312. Specifically, users can configure the robotic lawn mower's operating mode via touch or button presses to activate the second cutting disc 312 when the body 11 approaches an obstacle or a boundary of an operating area within a certain distance such as 10 cm, 15 cm, or 20 cm, thereby enhancing the robotic lawn mower's edge-trimming performance, and deactivate the second cutting disc 312 when the body 11 has moved beyond a certain distance such as 10 cm, 15 cm, or 20 cm from the obstacle or the boundary of the operating area. The human-machine interaction module 51 allows users to manually set and activate or deactivate the second cutting disc 312 based on the actual operating scenario, making the robotic lawn mower easier to operate and enhancing its practical applicability.

Certainly, during normal mowing operations of the robotic lawn mower, the second cutting disc 312 can also operate simultaneously with the first cutting disc 311 to improve mowing efficiency; or, the second cutting disc 312 can be activated only near an obstacle or a boundary of an operating area to achieve better edge trimming performance.

It should be noted that in other embodiments, to enhance operational convenience, the robotic lawn mower can be configured with both operating software app and control panel functionality for activating or deactivating the second cutting disc 312, and users can select their preferred control method based on practical application scenarios.

In an embodiment, referring to FIG. 1, the robotic lawn mower may further include a traveling assembly 21, which may specifically include a first traveling wheel 211 and a second traveling wheel 212, and the first and second traveling wheels 211, 212 may incorporate steering and/or driving functionality. In practical application, the steering and driving functionality of the first and second traveling wheels 211, 212 can be combined according to the practical application scenario. Through the above combinations, the robotic lawn mower can operate in front-wheel drive, rear-wheel drive, three-wheel drive, four-wheel drive, front-wheel steering, or rear-wheel steering mode to improve its environmental adaptability. In this embodiment, one or two first traveling wheels 211 may be configured: when one first traveling wheel 211 is configured, the first traveling wheel 211 is preferably installed on the central axis of the body 11 extending along the length direction X; and when two first traveling wheels 211 are configured, the two first traveling wheels 211 are preferably installed at a position close to two corners at one end of the body 11 along the length direction X. Similarly, two second traveling wheels 212 may be configured and preferably installed at a position close to two corners at one end of the body 11 along the length direction X. It should be noted that, when the first and second traveling wheels 211, 212 each include two traveling wheels, the four traveling wheels are preferably installed at positions close to four corners of the body 11.

In an embodiment, the robotic lawn mower may further include an energy module arranged on the body 11, which can supply power to one or more of the cutting assembly 31, the control module 41, the environmental perception module 42, the human-computer interaction module 51, and the traveling assembly 21, and may specifically be a rechargeable battery.

In an embodiment, the angle α between the line connecting the first and second center points and the width direction Y of the body 11 further satisfies 30° ≤ α ≤ 60°. Referring to FIG. 4A, the line connecting the first and second center points is a center connecting line b, and the angle α between the center connecting line b and the straight line a satisfies 30° ≤ α ≤ 60°. In this embodiment, the angle α is controlled to satisfy 30° ≤ α ≤ 60°, and the line connecting the first center point of the first cutting disc 311 and the second center point of the second cutting disc 312 is offset by at least 30° relative to the width direction Y of the body 11, effectively utilizing the space of the body 11 along the length direction X while reducing the dimension of the robotic lawn mower along the width direction Y. This design makes the relative positional arrangement of the two cutting discs on the robotic lawn mower more compact and reasonable. Additionally, by making the line connecting the first and second center points offset by at least 30° relative to the width direction Y of the body 11, the non-overlapping degree of the projections of the first and second center points in the length direction X are further increased, further increasing the offset between the cutting areas of the first and second cutting discs 311, 312 along the moving path and reducing overlap between the cutting areas of the first and second cutting discs 311, 312 in the width direction Y. As a result, the cutting capacity of the second cutting disc 312 is fully utilized and the overall cutting efficiency of the two cutting discs is improved.

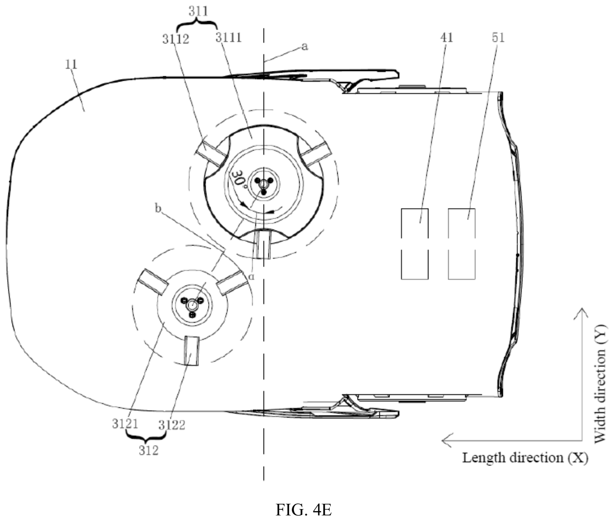

Referring to FIG. 4E, when α = 30°, the center connecting line b is offset by 30° toward one side of the body 11 along the length direction X compared to the center connecting line b in the case where α = 0° in FIG. 4B, and in this case, the second center point can be offset relative to the first center point toward either end of the body 11 along the length direction X, effectively utilizing the space of the body 11 along the length direction X while reducing the dimension of the robotic lawn mower along the width direction Y. This design makes the relative positional arrangement of the two cutting discs on the robotic lawn mower more compact and reasonable. When 0° < α < 30°, the center connecting line b falls between the center connecting lines b in FIGs. 4B and 4E, and in this case, although the second cutting disc 312 is offset to some degree from the first cutting disc 311 along the length direction X, the degree of offset is limited. As a result, the space of the body 11 along the length direction X cannot be fully utilized, requiring an increase in the lateral dimension of the body 11 along the width direction Y, which raises manufacturing costs and leads to a less compact or reasonable spatial structure of the robotic lawn mower.

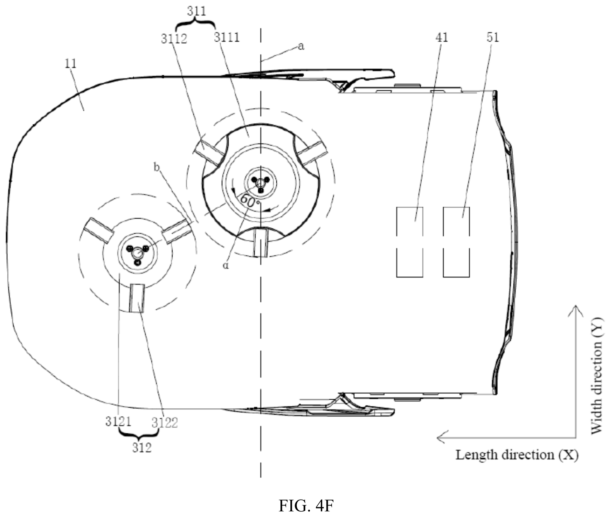

Referring to FIG. 4F, when α = 60°, the center connecting line b is offset by 20° toward one side of the body 11 along the width direction Y compared to the center connecting line b in the case where α = 80° in FIG. 4D, and the cutting area of the second cutting disc 312 along the moving path is offset to some degree from that of the first cutting disc 311 along the moving path, reducing overlap between the cutting areas of the first and second cutting discs 311, 312 along the moving path and effectively utilizing the cutting capacity of the second cutting disc 312 for cutting vegetation; however, when 60° < α < 80°, the center connecting line b falls between the center connecting lines b in FIGs. 4D and 4F, and in this case, although the second cutting disc 312 is offset to some degree from the first cutting disc 311, the degree of offset is limited, and the cutting areas of the first and second cutting discs 311, 312 along the moving path still significantly overlap, resulting in a significant waste of cutting capacity of the second cutting disc 312.

In an embodiment, the angle α between the line connecting the first and second center points and the width direction Y of the body 11 is equal to 45°. Referring to FIG. 4E, the projection distances of the line b connecting the first and second center points are equal along both the length and width directions X, Y, i.e. L2. In this case, the offset distance of the second center point relative to the first center point is equal along the length and width directions X, Y of the body 11, enabling the second cutting disc 312 to fully utilize the space of the body 11 along the length direction X for arrangement and ensuring a reasonable spatial arrangement of the two cutting discs on the robotic lawn mower. At the same time, the offset between the cutting areas of the first and second cutting discs 311, 312 along the moving path is appropriate so that the robotic lawn mower can fully utilize the cutting capacity of the second cutting disc 312 to assist the first cutting disc 311 in cutting vegetation.

It should be noted that when the dimensions of the robotic lawn mower's body 11 along the length and width directions X, Y are the same, i.e. the bottom of the body 11 is square-shaped, the spatial arrangement of the first and second cutting discs 311, 312 on the body 11 in this embodiment can not only adapt to the square shape characteristics of the bottom of the body 11 but also fully utilize the cutting capacity of the second cutting disc 312 to assist the first cutting disc 311 in cutting vegetation, contributing to a more compact and reasonable structural arrangement of the body 11.

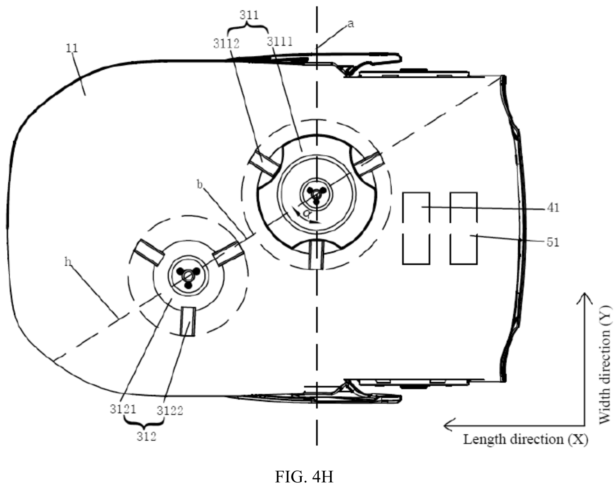

In other embodiments, since the body 11 of a commercially available robotic lawn mower in the conventional technology typically has a cuboid shape or approximately cuboid shape, referring to FIG. 4H, the length direction X of the body 11 corresponds to the long side of the bottom of the cuboid shape or approximately cuboid shape, while the width direction Y of the body 11 corresponds to the short side of the bottom of the cuboid shape or approximately cuboid shape. Referring to FIG. 4F, the diagonal line of the rectangular bottom of the lawn mower robot's body 11 is e, and both the first and second center points fall on the diagonal line e. The positional arrangement of the first and second cutting disc 311, 312 on the body 11 can not only fully utilize the cutting capacity of the second cutting disc 312 to assist the first cutting disc 311 in cutting vegetation but also adapt to the rectangular shape characteristics of the bottom of the body 11, contributing to a more compact and reasonable structural arrangement of the body 11.

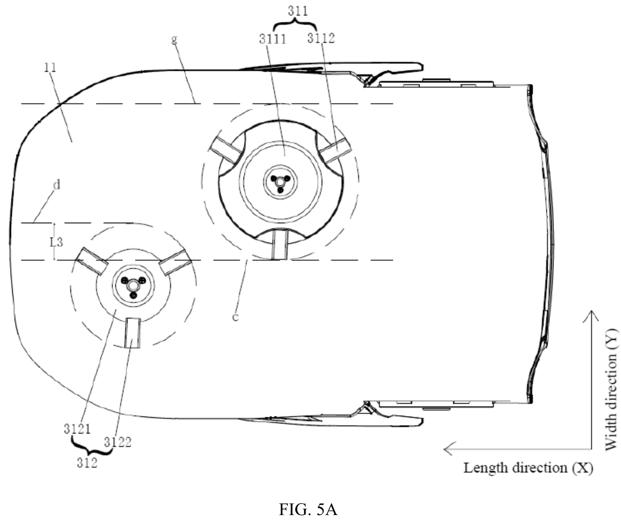

In an embodiment, orthographic projections of the first and second cutting areas in the width direction Y of the body 11 partially overlap, and a length of a projection of an overlapping portion between the first cutting area and the second cutting area in the width direction Y of the body 11 is L3, where 0 < L3/R2 < 2. As shown in FIG. 5A, the first cutting area has a first tangent line c and a fifth tangent line g extending along the length direction X on both sides of the width direction Y, while the second cutting area has a second tangent line d along the width direction Y that extends along the length direction X and falls between the first tangent line c and the fifth tangent line g. The distance between the first tangent line c and the second tangent line d represents the length L3 of the projection of the overlapping portion between the first cutting area and the second cutting area in the width direction Y the body 11. In this embodiment, by controlling L3 to satisfy 0 < L3/R2 < 2, the second cutting area of the second cutting disc 312 along the moving path maintains a certain degree of overlap with the first cutting area along the moving path 11, preventing two undesirable scenarios: first, the first and second cutting areas along the moving path are completely non-overlapped or overlap only at the edges, which would not only fail to achieve auxiliary vegetation cutting by the second cutting disc 312 to assist the first cutting disc 311 but also lead to unreasonable space utilization of the body 11 along the length direction X and unreasonable arrangement of the two cutting discs on the body 11; second, the second cutting area completely falls within the first cutting area or the first and second cutting areas overlap only at the edges along the moving path, which would result in wasted cutting capacity of the second cutting disc 312.

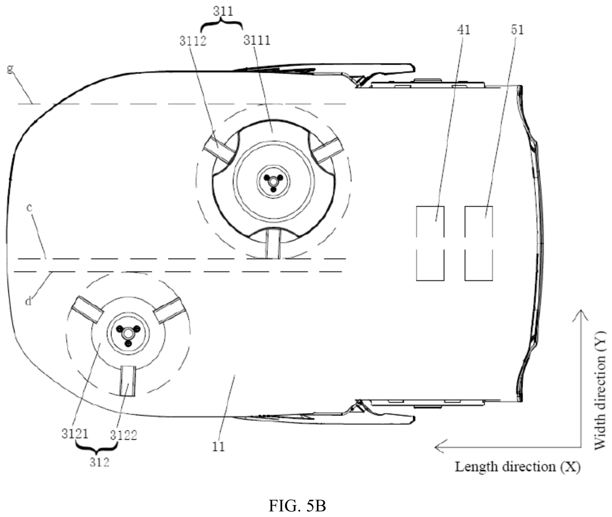

Referring to FIG. 5B, when the second cutting area completely falls on either side of the orthographic projection of the first cutting area in the width direction Y, i.e. the second cutting area completely falls outside the first and fifth tangent lines c, g, there is no overlap between the orthographic projections of the two cutting discs in the width direction Y, i.e. L3 = 0, resulting in L3/R2 = 0. In this case, the two cutting discs occupy excessive space of the body 11 along the width direction Y, leading to an increase in the dimension of the robotic lawn mower along the width direction Y and a less compact or reasonable spatial arrangement of the robotic lawn mower.

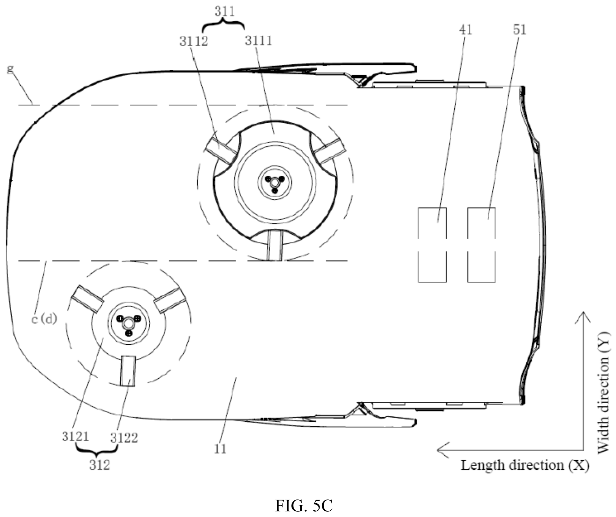

Referring to FIG. 5C, when the second cutting area falls on either side of the orthographic projection of the first cutting area in the width direction Y and the second tangent line d coincides with one of the first and fifth tangent lines c, g, the orthographic projections of the two cutting discs in the width direction Y overlap only at the edges, i.e. L3 = 0, still resulting in L3/R2 = 0. In this case, the two cutting discs occupy excessive space of the body 11 along the width direction Y, leading to an increase in the dimension of the robotic lawn mower along the width direction Y and a less compact or reasonable spatial arrangement of the robotic lawn mower.

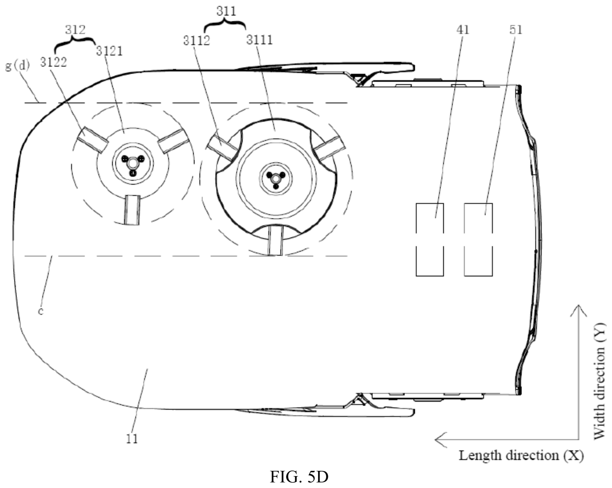

Referring to FIG. 5D, when the second cutting area falls within the orthographic projection of the first cutting area in the width direction Y and the second tangent line d coincides with one of the first and fifth tangent lines c, g, the orthographic projections of the two cutting discs in the width direction Y completely overlap, i.e. L3 = 2R2, resulting in L3/R2 = 2. In this case, the cutting area of the second cutting disc 312 along the moving path completely falls within that of the first cutting disc 311 along the moving path, resulting in a complete waste of cutting capacity of the second cutting disc 312.

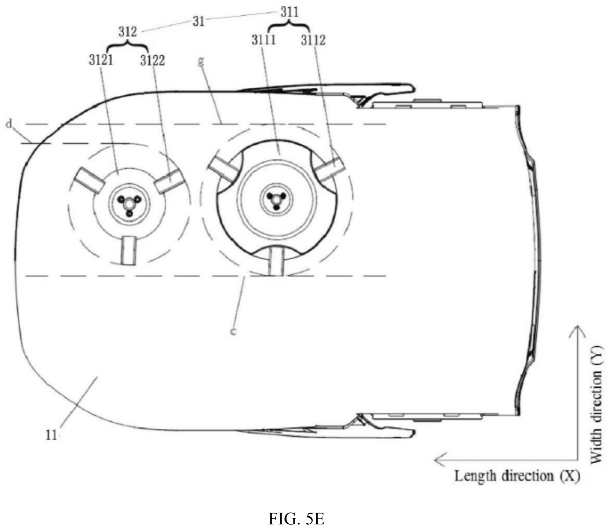

Referring to FIG. 5E, when the second cutting area completely falls within the orthographic projection of the first cutting area in the width direction Y, the orthographic projections of the two cutting discs in the width direction Y completely overlap, i.e. L3 = 2R2, resulting in L3/R2 = 2. In this case, the cutting area of the second cutting disc 312 along the moving path completely falls within that of the first cutting disc 311 along the moving path, resulting in a complete waste of cutting capacity of the second cutting disc 312.

In an embodiment, the minimum distance L1 between the first and second cutting areas further satisfies 5 mm ≤ L1 ≤ 200 mm. When L1 = 5 mm, the first and second cutting areas are very close to each other, resulting in a very compact positional arrangement of the two cutting discs 311, 312 on the body 11, which facilitates the design of a more miniaturized and integrated body 11 of the robotic lawn mower; when L1 = 200 mm, the first and second cutting areas are spaced apart at a certain distance, allowing the positional arrangement of the second cutting disc 312 to fully utilize the structural characteristics of the body 11 along the length direction x, which facilitates a more reasonable structural arrangement of the robotic lawn mower, particularly suitable for robotic lawn mowers with bodies 11 having rectangular or approximately rectangular bottoms; and when 5 mm < L1 < 200 mm, the design of the robotic lawn mower can be adjusted to prioritize either compactness or rationalization as needed, making the robotic lawn mower adaptable to a wider range of mowing scenarios.

In an embodiment, the distance L2 between the projection of the first center point in the width direction Y of the body 11 and the projection of the second center point in the width direction Y of the body 11 further satisfies 300 mm ≤ L2 ≤ 500 mm. By restricting L2 within the range of 300 mm ≤ L2 ≤ 500 mm, the dimension of the robotic lawn mower's body 11 along the width direction Y can be restricted, ensuring the body 11 maintains an appropriate spanning distance along its moving path while maintaining the mowing efficiency of the robotic lawn mower.

In an embodiment, a diameter of the first cutting area is D1, satisfying 100 mm ≤ D1 ≤ 350 mm; and a diameter of the second cutting area is D2, satisfying 80 mm ≤ D2 ≤ 180 mm. In this embodiment, by designing the robotic lawn mower according to the aforementioned dimensional requirements, the robotic lawn mower can adapt to most mowing scenarios while simultaneously balancing factors such as energy consumption and dimensions of the body 11.

It should be noted that in other embodiments, the diameter D1 of the first cutting area and the diameter D2 of the second cutting area can be set to dimensions outside the aforementioned range to adapt to different mowing scenarios.

In an embodiment, an orthographic projection of the second cutting area on the body 11 falls within the body 11. In this embodiment, by making the orthographic projection of the second cutting area on the body 11 fall within the body 11, i.e. the edge of the operating area of the second cutting disc 312 remains inside the edge of the body 11, it prevents the second cutting disc 312 from protruding beyond the body 11 during operation, eliminating potential safety hazards and ensuring safe operation of the robotic lawn mower.

In an embodiment, a rotational speed of the first cutting disc 311 is V1, satisfying 1800 r/min ≤ V1 ≤ 3800 r/min; and a rotational speed of the second cutting disc 312 is V2, satisfying 2000 r/min ≤ V2 ≤ 6000 r/min. In this embodiment, the robotic lawn mower is provided with one or more sets of drive assemblies internally to drive the first and second cutting discs 311, 312. These drive assemblies may include motors equipped with gearboxes, allowing the rotational speed V1 of the first cutting disc 311 and the rotational speed V2 of the second cutting disc 312 to be adjusted by shifting the gearboxes. By controlling the rotational speed V1 of the first cutting disc 311 to satisfy 1800 r/min ≤ V1 ≤ 3800 r/min and the rotational speed V2 of the second cutting disc 312 to satisfy 2000 r/min ≤ V2 ≤ 6000 r/min, the wide mowing power range of the first and second cutting discs 311, 312 of the robotic lawn mower can meet most operational requirements on the market, making the robotic lawn mower adaptable to a vast majority of mowing scenarios.

In an embodiment, the first cutting disc 311 includes a first base 3111 and one or more first blades 3112 movably mounted around a periphery of the first base 3111, where the first blades 3112 are rotatable with the first base 3111, and the first cutting area is a maximum cutting area formed by rotation of the first blades 3112 with the first base 3111; and the second cutting disc 312 includes a second base 3121 and one or more second blades 3122 movably mounted around a periphery of the second base 3121, where the second blades 3122 are rotatable with the second base 3121, and the second cutting area is a maximum cutting area formed by rotation of the second blades 3122 with the second base 3121.

In this embodiment, the first base 3111 is provided with first mounting slots for installing the first blades 3112, where the first mounting slots may be specifically fan-shaped, with first central shafts arranged at fan centers, and the end of each of the first blades 3112 inserted into the fan-shaped slots is provided with a first shaft hole, allowing the first central shafts and the first shaft holes to form a rotatable connection. When the first cutting disc 311 rotates to cut vegetation along the moving path, the first blades 3112 can rotate relative to the first base 3111 to some degree within the fan-shaped slots. When encountering dense grass, the first blades 3112 have a greater resistance to rotation, causing them to rotate at a certain angle opposite to the rotational direction of the first base 3111, thereby providing a certain degree of protection to the drive assembly of the first cutting disc 311 and preventing damage to the drive assembly due to overload. Furthermore, in other embodiments, the first mounting slots are provided with first arc-shaped guide grooves concentric with the first central shafts, while the first blades 3112 are provided with first guide rods corresponding to the first arc-shaped guide grooves, and the interaction between the first arc-shaped guide grooves and the first guide rods can guide the deflection direction of the first blades 3112 within the first mounting slots, contributing to stability during deflection of the first blades 3112. The second base 3121 is provided with second mounting slots for installing the second blades 3122, where the second mounting slots may be specifically fan-shaped, with second central shafts arranged at fan centers, and the end of each of the second blades 3122 inserted into the fan-shaped slots is provided with a second shaft hole, allowing the second central shafts and the second shaft holes to form a rotatable connection. When the second cutting disc 312 rotates to cut vegetation along the moving path, the second blades 3122 can rotate relative to the second base 3121 to some degree within the fan-shaped slots. When encountering dense grass, the second blades 3122 have a greater resistance to rotation, causing them to rotate at a certain angle opposite to the rotational direction of the second base 3121, thereby providing a certain degree of protection to the drive assembly of the second cutting disc 312 and preventing damage to the drive assembly due to overload. Furthermore, in other embodiments, the second mounting slots are provided with second arc-shaped guide grooves concentric with the second central shafts, while the second blades 3122 are provided with second guide rods corresponding to the second arc-shaped guide grooves, and the interaction between the second arc-shaped guide grooves and the second guide rods can guide the deflection direction of the second blades 3122 within the second mounting slots, contributing to stability during deflection of the second blades 3122.

It should be noted that the first cutting area represents the maximum coverage area accessible by the first blades 3112, while the second cutting area represents the maximum coverage area accessible by the second blades 3122.

The robotic lawn mower provided by the present application is described above in detail. The principle and implementation manners of the present application are elaborated by applying specific examples. The descriptions of the above embodiments are only used to help understand the method and its core idea of the present application; meanwhile, according to the idea of the present application, there will be changes in the specific implementation manners and the application scope for a person of ordinary skill in the art. In summary, the content of the specification should not be understood as a limitation to the present application.

## Claims

1. A robotic lawn mower, comprising:
a body (11) having a length direction and a width direction that are perpendicular to each other;
a cutting assembly (31) arranged at a bottom of the body (11) and configured to move with the body (11) to cut vegetation, comprising a first cutting disc (311) and a second cutting disc (312); and
a control module (41) configured to activate or deactivate the first cutting disc (311) and the second cutting disc (312), wherein
the first cutting disc (311) has a first cutting area that is circular in shape with a first center point and a first cutting radius, while the second cutting disc (312) has a second cutting area that is circular in shape with a second center point and a second cutting radius; the first cutting radius is R1, while the second cutting radius is R2; and a minimum distance between the first and second cutting areas is L1, a distance between a projection of the first center point in the width direction of the body (11) and a projection of the second center point in the width direction of the body (11) is L2, and an angle between a line connecting the first and second center points and the width direction of the body (11) is α, wherein
0° < α ≤ 80°, R1 > R2 and R1 - R2 < L2, and 0.01 ≤ L1/L2 ≤ 0.6666.

2. The robotic lawn mower of claim 1, wherein
the robotic lawn mower further comprises an environmental perception module, and the control module (41) is configured to activate the second cutting disc (312) when the environmental perception module detects a preset condition.

3. The robotic lawn mower of claim 2, wherein
the preset condition comprises that a distance between the body (11) and an obstacle or a boundary of an operating area is less than a set threshold.

4. The robotic lawn mower of claim 3, wherein
the environmental perception module comprises at least one of a laser radar, a visual assembly, or a physical perception assembly.

5. The robotic lawn mower of claim 1, wherein
the robotic lawn mower further comprises a human-machine interaction module (51) configured to receive a control instruction, and the control module (41) is configured to activate or deactivate the second cutting disc (312) in response to the control instruction.

6. The robotic lawn mower of claim 1, wherein
the angle α between the line connecting the first and second center points and the width direction of the body (11) further satisfies 30° ≤ α ≤ 60°.

7. The robotic lawn mower of claim 6, wherein
the angle α between the line connecting the first and second center points and the width direction of the body (11) is equal to 45°.

8. The robotic lawn mower of claim 1, wherein
orthographic projections of the first and second cutting areas in the width direction of the body (11) partially overlap, and a length of a projection of an overlapping portion between the first and second cutting areas in the width direction of the body (11) is L3, wherein 0 < L3/R2 < 2.

9. The robotic lawn mower of claim 1, wherein
the minimum distance L1 between the first and second cutting areas further satisfies 5 mm ≤ L1 ≤ 200 mm.

10. The robotic lawn mower of claim 1, wherein
the distance L2 between the projection of the first center in the width direction of the body (11) and the projection of the second center point in the width direction of the body further satisfies 300 mm ≤ L2 ≤ 500 mm.

11. The robotic lawn mower of claim 1, wherein
a diameter of the first cutting area is D1, satisfying 100 mm ≤ D1 ≤ 350 mm; and
a diameter of the second cutting area is D2, satisfying 80 mm ≤ D2 ≤ 180 mm.

12. The robotic lawn mower of claim 1, wherein
an orthographic projection of the second cutting area on the body (11) falls within the body (11).

13. The robotic lawn mower of claim 1, wherein
a rotational speed of the first cutting disc (311) is V1, satisfying 1800 r/min ≤ V1 ≤ 3800 r/min; and
a rotational speed of the second cutting disc (312) is V2, satisfying 2000 r/min ≤ V2 ≤ 6000 r/min.

14. The robotic lawn mower of claim 1, wherein
the first cutting disc (311) comprises a first base (3111) and one or more first blades (3112) movably mounted around a periphery of the first base (3111), wherein the first blades (3112) are rotatable with the first base (3111), and the first cutting area is a maximum cutting area formed by rotation of the first blades (3111) with the first base (3111); and the second cutting disc (312) comprises a second base (3121) and one or more second blades (3122) movably mounted around a periphery of the second base (3121), wherein the second blades (3122) are rotatable with the second base (3121), and the second cutting area is a maximum cutting area formed by rotation of the second blades (3122) with the second base (3121).
